# EUROPÄISCHE PATENTSCHRIFT

(11) **EP 1 247 618 B1**
(45) Veröffentlichungstag und Bekanntmachung des Hinweises auf die Patenterteilung: **12.05.2004**
(21) Anmeldenummer: 02006244.4
(22) Anmeldetag: 20.03.2002
(51) Int. Cl.: B25B 11/00, B41C 1/18, B23K 26/26

(54) **Vorrichtung zur Erzeugung einer hülsenförmigen Druckform**
Device for producing a tube-shaped printing form
Dispositif pour fabriquer une forme d'impression en forme de douille

(30) Priorität: 03.04.2001 DE 10116609
(43) Veröffentlichungstag der Anmeldung: 09.10.2002
(73) Patentinhaber: MAN Roland Druckmaschinen AG, 63012 Offenbach (DE)
(72) Erfinder: Hoffmann, Eduard, Dr., 86399 Bobingen (DE); Winterholler, Johann, 86316 Friedberg (DE); Grieser, Alfons, 86577 Sielenbach (DE); Bilzer, Katrin, 86674 Baar (DE)
(74) Vertreter: Schober, Stefan, Dipl.-Ing.

(56) Entgegenhaltungen:
- EP-A- 0 992 317
- DE-C- 4 338 467
- DE-C- 19 710 901
- US-A- 5 964 568
- US-B1- 6 182 957

## Beschreibung

Die Erfindung betrifft eine Vorrichtung zur Erzeugung einer hülsenförmigen Druckform aus einem plattenförmigen Zuschnitt gemäß dem Oberbegriff des übergeordneten Anspruch 1.

Eine derartige Vorrichtung, die lediglich ein manuelles Einlegen des plattenförmigen Zuschnitts erfordert und nach der Platteneinlage den Rundungsvorgang und die genaue registerhaltige Positionierung der Plattenenden zum Verbinden, bzw. zum Verschweißen selbsttätig ermöglicht, ist in der DE 43 11 078 C1 beschrieben.

Um das maßhaltige Ablängen der plattenförmigen Rohform außerhalb dieser Vorrichtung mittels einer Blechschere zu vermeiden, wird in der DE 43 38 467 C1 vorgeschlagen, den Fertigungsvorgang der hülsenförmigen Druckform in dieser Vorrichtung dahingehend zu verbessern, daß die eine dem Formzylinder entsprechende Breite aufweisende plattenförmige Rohform in der Länge grob mit größerem als das für eine Druckform vorgegebene Maß abgelängt wird, daß die Rohform im registergerechten, gerundeten Zustand in der Schweißvorrichtung mittels des Laserstrahls als Schneidegerät maßhaltig abgelängt wird, so daß mindestens ein Abfallstück entsteht, daß das Abfallstück entfernt wird, die beiden den Anfang und Ende der Druckform bildenden Plattenkanten überlappungsfrei einander gegenübergestellt und miteinander verschweißt werden.

Aus der DE 197 10 901 C1 ist eine weitere gattungsgemäße Vorrichtung bekannt. Hier ist oberhalb des Anlagetisches im strahlensicher verschließbaren Gehäuse eine Öffnung belassen, durch diese eine Einrichtung zum Fixieren des plattenförmigen Zuschnittes als plane Rohform in Form eines auf die entsprechende Plattengröße einstellbarer Fixierrahmen aus dem Gehäuse heraus zur Aufnahme der Rohform über den Anlagetisch fahrbar ist.

Der Fixierrahmen umfaßt zwei entsprechend dem Abstand der zu verbindenden Plattenkanten der Rohform auf einem Schlitten einstellbare und längs an der jeweiligen Plattenkante ansetzbare Festhalteleisten. Der Fixierrahmeri umfaßt weiterhin eine Registereinrichtung, die so ausgelegt ist, daß diese mit einem Registersystem der plattenförmigen Rohform zusammenwirkt. So sind die Plattenkanten hier beispielsweise mittels eines Stiftregisters der am Fixierrahmen angeordneten Festhalteleisten und einem Paßloch-System der plattenförmigen Rohform registergerecht an diesen Festhalteleisten fixierbar.

Nachteil der oben beschriebenen Vorrichtungen ist, dass zum registergerechten Fertigen der hülsenförmigen Druckform mit einem externen Paßloch-System als Registereinrichtung gearbeitet wird. Dies erfordert jedoch immer den Einsatz einer Plattenstanze mittels derer die plattenförmige Rohform mit der Registereinrichtung in Form des Paßloch-Systems versehen wird.

Aufgabe der Erfindung ist es, eine verbesserte gattungsgemäße Vorrichtung zu schaffen, die einen registergerechten Fertigungsvorgang der hülsenförmigen Druckform sicherstellt, wobei auf ein in der plattenförmigen Rohform angeordnetes Register in Form eines Paßloch-System verzichtet werden kann.

Diese Aufgabe wird durch die Merkmale im kennzeichnenden Teil des Patentanspruchs 1 gelöst.

Vorteilhafte Ausgestaltungen der Erfindung sind den Unteransprüchen zu entnehmen.

Ein bedeutungsvoller Vorteil ist, dass mit Wegfall des externen Paßloch-Systems in der plattenförmigen Rohform auf eine Plattenstanze verzichtet werden kann. Die erfindungsgemäße Vorrichtung gestattet einen registergerechten Fertigungsvorgang einer hülsenförmigen Druckform, wobei ein geringerer Verschnitt beim maßhaltigen Ablängen der Rohform im registergerechten, gerundeten Zustand entsteht.

Bedeutungsvoll ist, dass mittels der als Saugelemente ausgestalteten Fixiermittel am Plattenansaugrahmen der Vorrichtung sowohl Rohformen aus nicht magnetischem Material, beispielsweise Aluminium, als auch Rohformen aus magnetisierbarem Material plan bzw. eben ausgerichten fixiert und transportiert werden können.

Die Saugelemente sind vorteilhaft in einem Raster angeordnet. Das Raster ist derart ausgestaltet, dass eine Viehlzahl von häufig vorkommenden Druckformdurchmessern und Druckformbreiten, welche im Bereich der Mindestlänge und maximalen Länge der Rohform liegen und somit den Umfang der hülsenförmigen Druckform bestimmen, abgedeckt werden. Des weiteren sind die Saugelemente im Raster derart angeordnet, dass die Rohform, aus der die üblich eingesetzten Druckformdurchmesser und Druckformbreiten hergestellt werden, ohne Durchhang vom Plattenansaugrahmen bzw. von den Saugelementen erfaßt und gefördert werden.

Des weiteren ist es von Bedeutung, dass mittels der Vorrichtung eine hülsenförmige Druckform sowohl mit variablem Durchmesser, als auch variabler Länge bzw. Druckbreite herstellbar ist.

Mit der Vorrichtung läßt sich also eine formatvariable hülsenförmige Druckform herstellen.

Nachfolgend ist ein Ausführungsbeispiel der Erfindung anhand der Zeichnung erklärt. Es zeigen stark schematisiert:
- Fig. 1: eine Seitenansicht einer erfindungsgemäßen Vorrichtung zur Erzeugung einer hülsenförmigen Druckform,
- Fig. 2: eine Forderansicht der erfindungsgemäßen Vorrichtung,
- Fig. 3: eine Draufsicht der erfindungsgemäßen Vorrichtung,

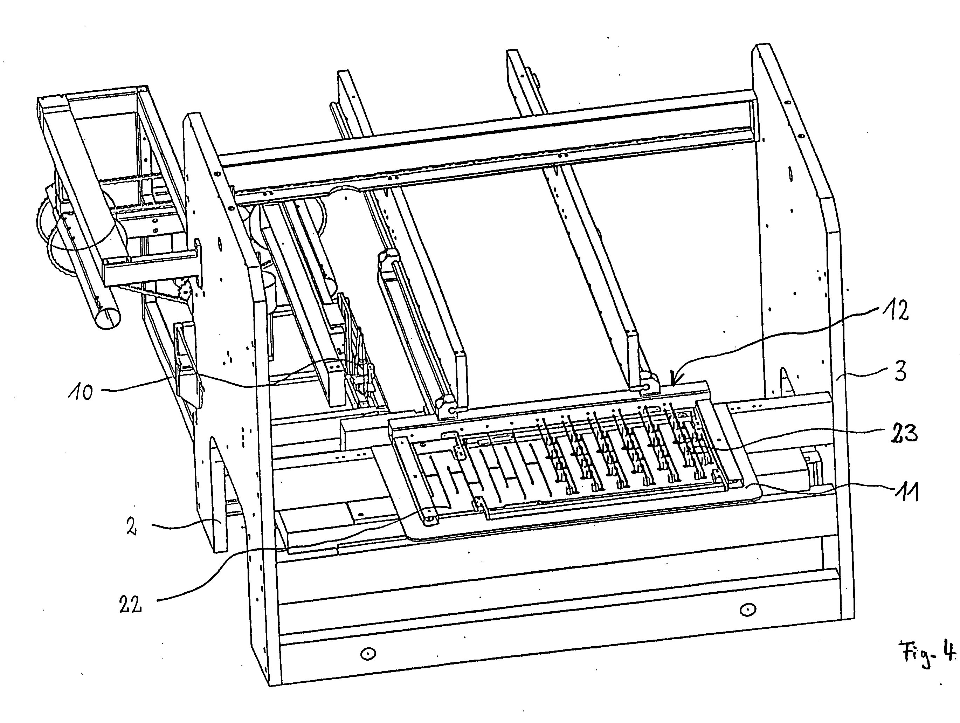

- Fig. 4: eine Ansicht von vorne oben aus betrachtet der erfindungsgemäßen Vorrichtung, wobei die Transportvorrichtung über den Anlagetisch verfahren ist,

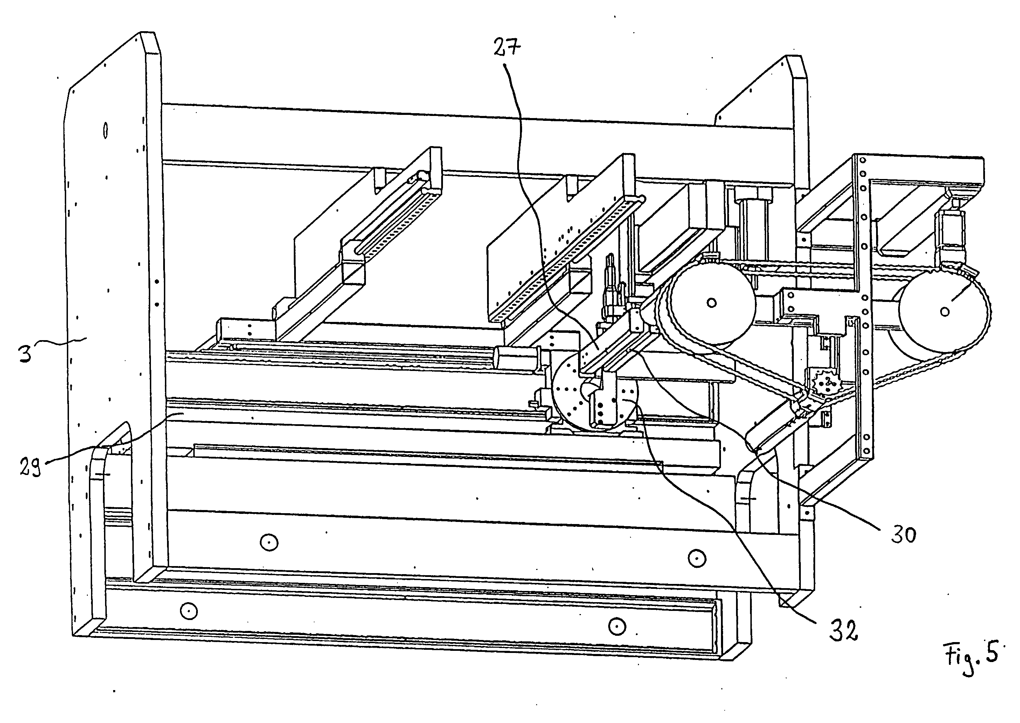

- Fig. 5: eine Ansicht von hinten unten aus betrachtet der erfindungsgemäßen Vorrichtung, wobei die Transportvorrichtung über den Anlagetisch verfahren ist,
- Fig. 6: eine Ansicht von vorne oben aus betrachtet der erfindungsgemäßen Vorrichtung, wobei die Transportvorrichtung über die Magnetleisten verfahren ist, und
- Fig. 7: eine Ansicht von hinten unten aus betrachtet der erfindungsgemäßen Vorrichtung, wobei die Transportvorrichtung über die Magnetleisten verfahren ist.

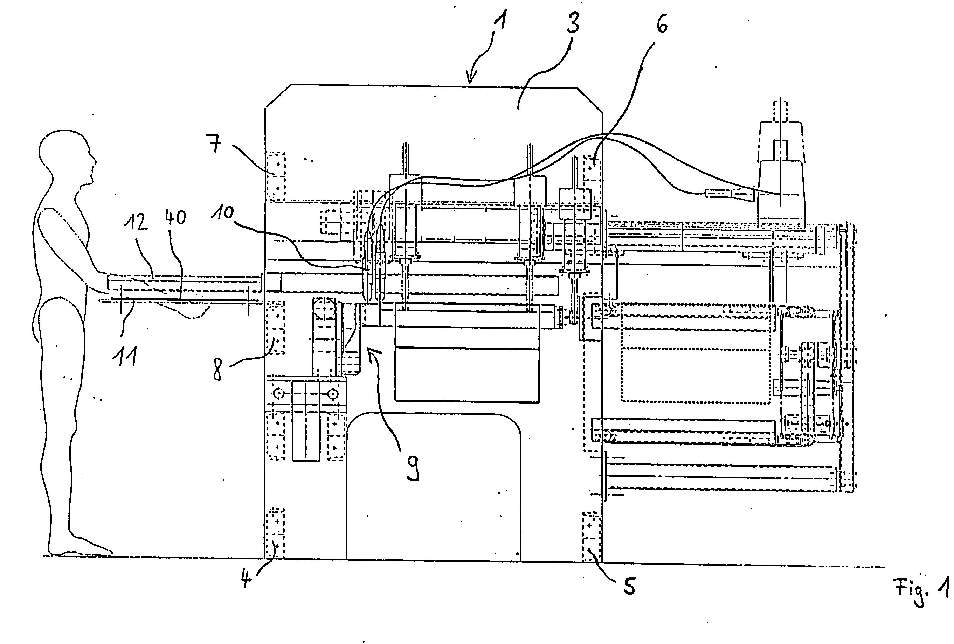

In Fig. 1 ist ein Gehäuse 1 bestehend aus Seitenwänden 2; 3 und Traversen 4; 5; 6; 7; 8 angedeutet, in welches eine Einrichtung zur Rundformung 9 von plattenförmigen Zuschnitten und eine Schweißanlage 10 integriert ist.

Außerhalb des Gehäuses 1 ist ein Anlagetisch 11 angeordnet, auf den plattenförmige Zuschnitte vorzugsweise in einer Mulde und/oder mittels Anschlägen und/oder Markierungen vorzentriert manuell ablegbar sind.

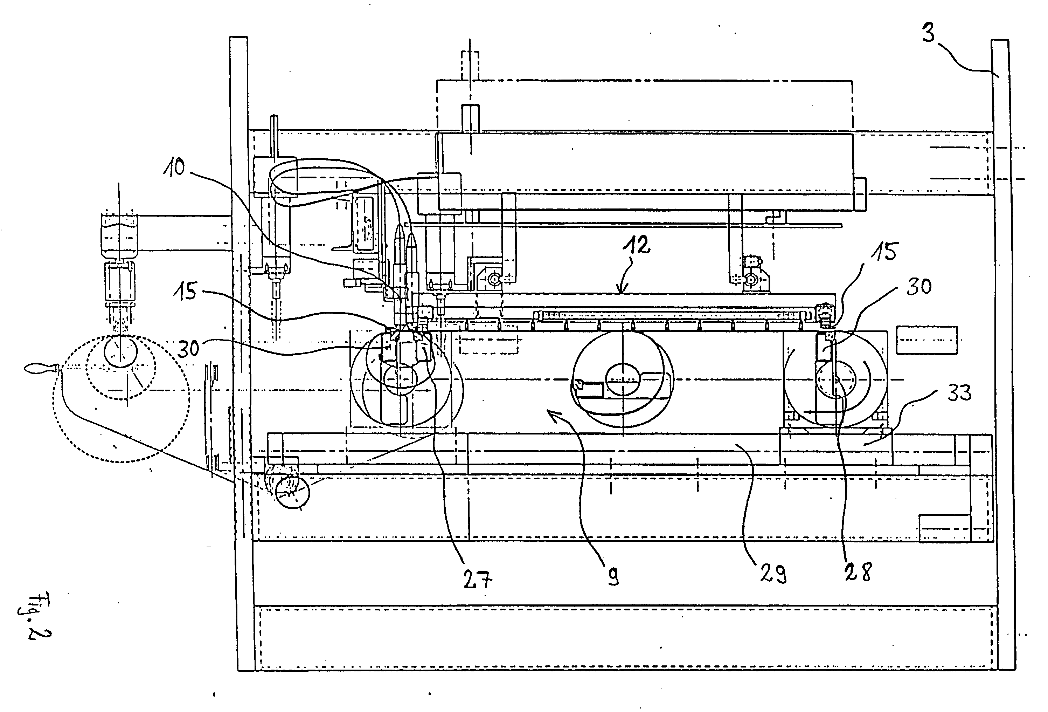

Oberhalb des Anlagetisches 11 ist eine Einrichtung zum Fixieren des plattenförmigen Zuschnittes als plane Rohform 40 in Form eines auf die entsprechende Plattengröße einstellbaren Plattenansaugrahmen 12 aus dem Gehäuse 1 heraus zur Aufnahme der Rohform 40 über den Anlagetisch 11 mittels eines Linearantriebes 13 fahrbar (Fig. 2).

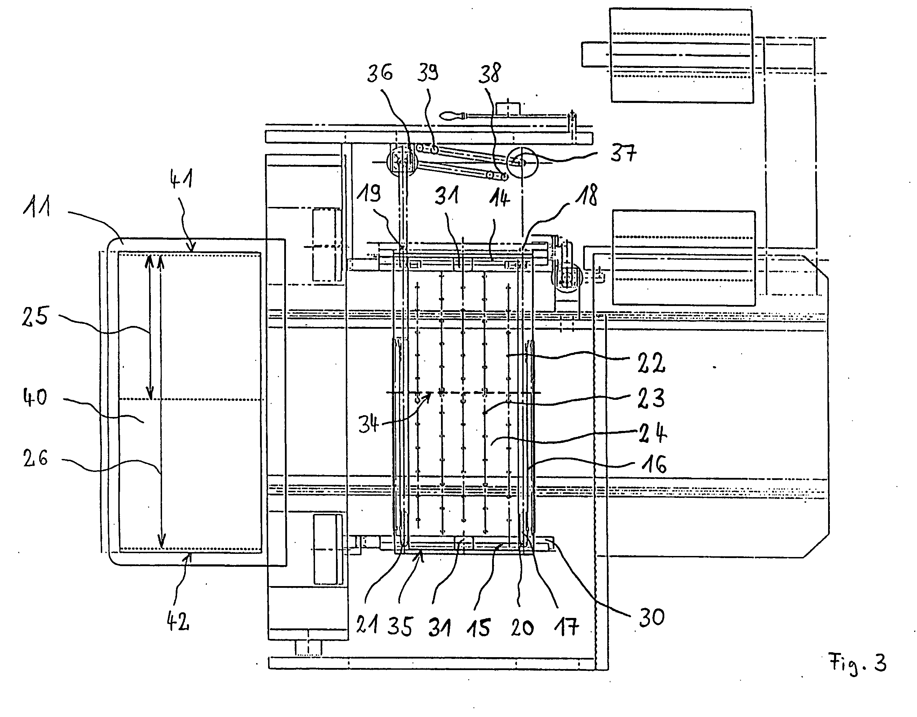

Der Plattenansaugrahmen 12 umfaßt zwei Stahlleisten 14; 15, wobei eine, hier die Stahlleiste 15, entsprechend dem Abstand der zu verbindenden Plattenkanten 41; 42 der Rohform 40 auf einem mittels eines von einem Linearantrieb 16 angetriebenen Schlitten 17 einstellbar und längs an der jeweiligen Plattenkante positionierbar ist (Fig. 3).
Die Position der Plattenkante 42 an welcher die Stahlleiste 15 positioniert ist, wird, nicht näher dargestellt, mittels einer am Schlitten 17 angeordneten Sensorik ermittelt.
Die Stahlleiste 14 ist ortsfest über Halteelemente 18; 19 im Plattenansaugrahmen 12 angeordnet. Die Stahlleiste 15 ist mittels Halteelemente 20; 21 am Schlitten 17 des Plattenansaugrahmens 12 angeordnet.
In bekannter Weise sind die Halteelemente 18 bis 21 vorzugsweise als elektrische Haftmagnete ausgeführt, die mit entsprechenden Weicheisenkernen der Stahlleisten 14; 15 zusammenwirken können.

Der Plattenansaugrahmen 12 umfaßt weiterhin eine mit Saugelementen 22; 23 in einem geeigneten Raster durchsetzte Platte 24. Die Saugelemente 22 sind ortsfest angeordnet. Mittels dieser ortsfest angeordneten Saugelemente 22 kann durch Absenken des Plattenansaugrahmens 12 mittels einer Hubvorrichtung 31 eine plattenförmige Rohform 40 mit einer Mindestlänge 25 angesaugt und am Plattenansaugrahmen 12 eben ausgerichtet fixiert werden.
Für plattenförmige Rohformen 40, die über die Mindestlänge 25 hinausgehen und bis zu einer maximalen Länge 26 ausgebildet sind, sind je nach tatsächlicher Länge der Rohform 40 die jeweiligen zwischen dem Bereich der Mindestlänge 25 und der maximalen Länge 26 noch zusätzlich benötigten an die Rohform an- und abstellbar ausgestalteten Saugelemente 23 zuschaltbar, um eine derartige über die Mindestlänge 25 hinausgehende Rohform 40 lagestabil anzusaugen und am Plattenansaugrahmen 12 eben ausgerichtet zu fixieren (Fig. 3).
Alternativ können die Saugelemente 22 auch an die Rohform 40 an- und abstellbar ausgestaltet sein.

Die Daten über die Länge der plattenförmigen Rohform 40 wird, nicht näher dargestellt, in einer Maschinensteuerung hinterlegt. Von einer die Vorrichtung zu bedienenden Person können beispielsweise diese Daten über die Länge der plattenförmigen Rohform 40 über eine Tastatur in die Maschinensteuerung eingegeben werden. Über die Maschinensteuerung werden entsprechend der eingegebenen Länge der Rohform 40 die für einen registergerechten und ebenen Transport erforderlichen Saugelemente 22; 23 automatisch aktiviert.

Darüber hinaus ist es, nicht näher dargestellt, denkbar, dass eine optische oder mechanische Abtastvorrichtung die Größe, sprich sowohl die Länge, als auch die Breite der plattenförmigen Rohform 40 automatisch überprüft und erkennt. Eine mit dieser Abtastvorrichtung in Verbindung stehende Steuerung oder Regelungseinrichtung schaltet dann automatisch die zur Fixierung am Plattenansaugrahmen 12 erforderlichen Saugelemente 22; 23 gemäß den ermittelten Daten bezüglich der Länge und Breite der Rohform 40 je nach Bedarf zu.

Nach Betätigung der Saugelemente 22; 23 und Anheben des Plattenansaugrahmens 12 mittels der Hubvorrichtung 31wird die plattenförmige Rohform 40 an ihrer Oberseite, bzw. an der dem Anlagetisch 11 gegenüberliegenden Seite des Plattenansaugrahmens 12 transportbereit gehalten und ist eben ausgerichtet am Plattenansaugrahmen 12 fixiert.

Der Plattenansaugrahmen 12 ist mittels des Linearantriebes 13, der ein Seilzug, eine Zahnstange oder eine in Schienen abgestützte Kettenführung sein kann, in das Gehäuse 1 über die Einrichtung zur Rundformung 9 fahrbar. Die Endpositionen des Fahrweges des Plattenansaugrahmens 12 sind im und außerhalb des Gehäuses 1 vorzugsweise mittels Anschlägen bestimmbar.

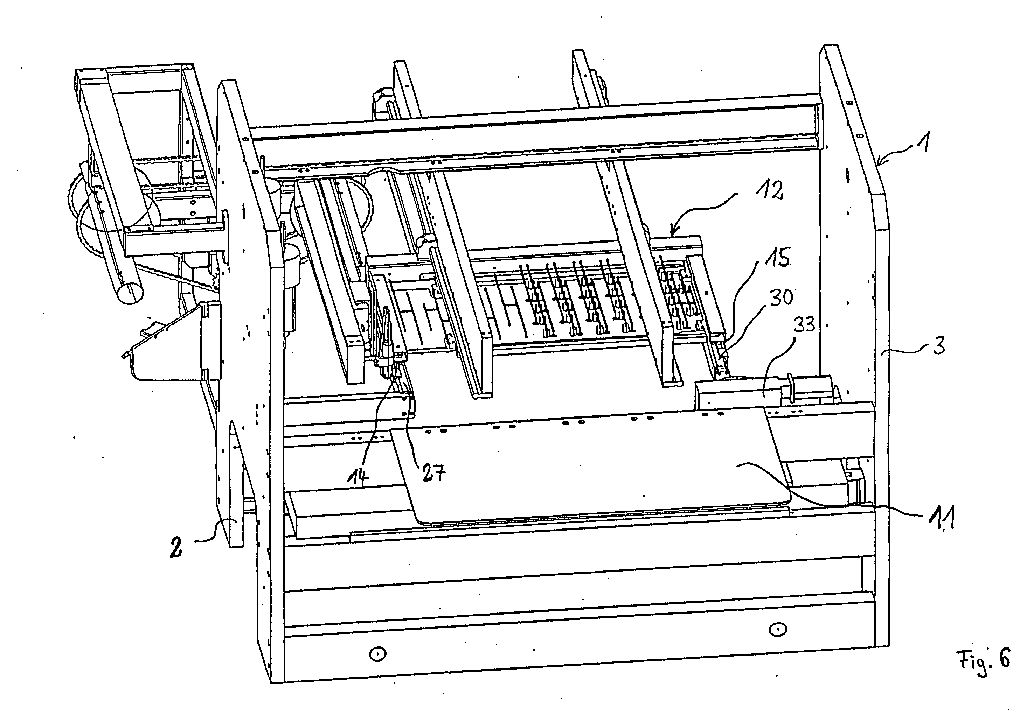

Die Einrichtung zur Rundformung 9 ist in der DE 43 11 078 C1 beschrieben, die Funktionsweise ist analog dazu. Für die zu verbindenden Plattenkanten 41; 42 ist eine feststehend angeordnete Magnetleiste 27 und eine um eine Achse 28 drehbar und entlang einer Gleitführung 29 transversal bewegbare Magnetleiste 30 vorgesehen.
In bekannter Weise sind die Magnetleisten 27; 30 vorzugsweise als elektrische Haftmagnete ausgestaltet (Fig. 2; Fig. 6; Fig. 7).

Die transversal bewegbare Magnetleiste 30 wird entsprechend der jeweiligen Länge der plattenförmigen Rohform 40 positioniert. Die Daten zur Positionierung der transversal bewegbare Magnetleiste 30 werden beispielsweise von der oben beschriebenen Abtastvorrichtung und/oder der Maschinensteuerung zur Verfügung gestellt.

Ist der Plattenansaugrahmen 12 über den entsprechend eingestellten Magnetleisten 27; 30 positioniert, so wird der Plattenansaugrahmen 12 über eine am Plattenansaugrahmen 12 angeordnete Hubvorrichtung 31 in Richtung der Magnetleisten 27; 30 so weit abgesenkt, bis die Stahlleisten 14; 15 auf den Magnetleisten 27; 30 anliegen. Die Stahlleisten 14; 15 des Plattenansaugrahmens 12 sind elektromagnetisch anziehbar und die plattenförmige Rohform 40 auf die Magnetleisten 27; 30 klemmbar.

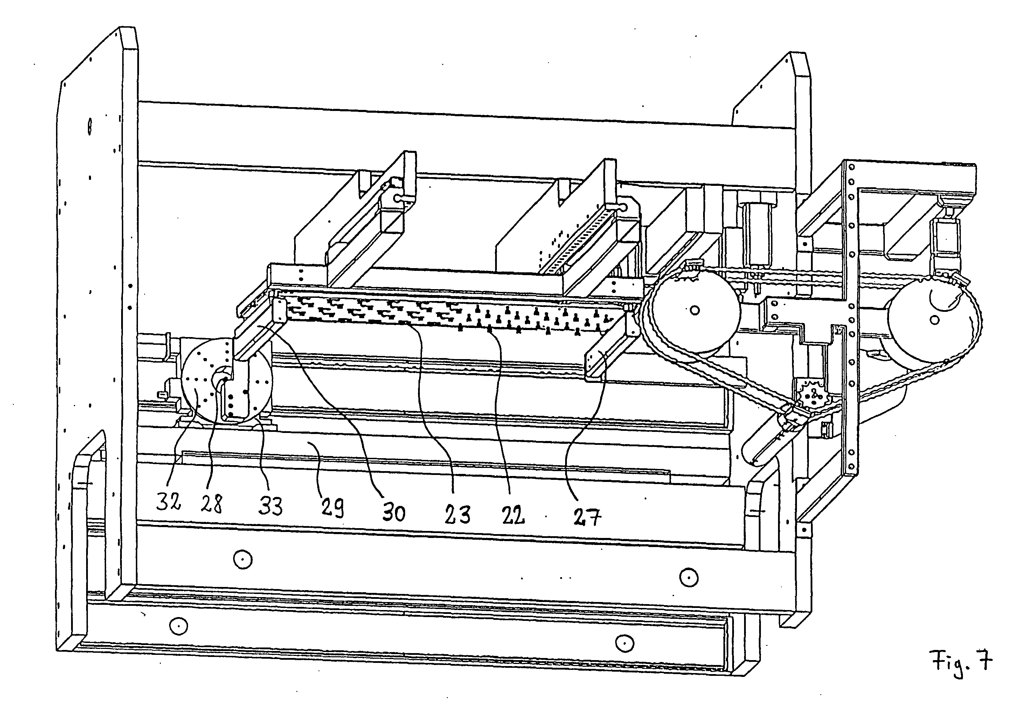

Nach dem Klemmen der plattenförmigen Rohform 40 auf den Magnetleisten 27; 30 mittels der elektromagnetisch angezogenen Stahlleisten 14, 15 werden die Saugelemente 22; 23 abgestellt, so daß die plattenförmige Rohform 40 waagerecht gestreckt nur noch zwischen den Magnetleisten 27; 30 in Verbindung mit den Stahlleisten 14; 15 registergerecht fixiert ist (Fig. 7).

Der leere Plattenansaugrahmen 12 ist soweit aus dem Arbeitsbereich der Einrichtung zur Rundformung 9 fahrbar, bis, nicht näher dargestellt, sein Gehäuseabschluß beispielsweise eine Gehäuseöffnung vor möglichen nach Außen austretenden Stahlen schützend verschließt.

Zur Hülsenformung wird die Magnetleiste 30 gedreht und gleichzeitig transversal in Richtung der feststehenden Magnetleiste 27 verschoben. Dazu ist die Magnetleiste 30 auf einen Rundtisch 32 gebaut, der in einem Schlitten 33 auf der Gleitführung 29 verfahrbar ist (Fig. 2; Fig. 7). Dabei unterfährt die Magnetleiste 30 die feststehende Magnetleiste 27 und steht nach einer vollen Umdrehung der feststehenden Magnetleiste 27 gegenüber, so daß die Plattenkanten sich ebenfalls gegenüber stehen.

An der Stelle, an der die Magnetleisten 27; 30 sich unter Ausbildung einer hülseförmigen Druckform gegenüber stehen, ist im Gehäuse 1 über den Magnetleisten 27; 30 eine Schweißanlage in Form mindestens eines Lasers 10 angeordnet, so daß Laserschneiden und Laserschweißen auf der hülsenförmigen Druckform durchführbar ist, so wie es bereits in der DE 43 38 467 C1 beschrieben ist.

Alle Arbeitsgänge zur Erzeugung einer hülsenförmigen Druckform, mit Ausnahme des manuellen Einlegens des plattenförmigen Zuschnittes der Rohform 40 vom Plattenstapel auf den Anlagetisch 11, sind bei dieser Vorrichtung vollautomatisch durchführbar. Dabei kann wiederum auf den Anlagetisch 11 ein Plattenstapel aus mehreren solcher Zuschnitte aufgelegt werden.

Alternativ kann, nicht näher dargestellt, der Anlagetisch auch wie eine Hubvorrichtung ausgestaltet sein, auf welchem ein Stapel von mehreren plattenförmigen Rohformen aufgelegt werden kann. Mittels der Hubvorrichtung wird der Stapel von plattenförmigen Zuschnitten der Rohformen an den Plattenansaugrahmen 12 gefördert. Der Plattenansaugrahmen nimmt von diesem Stapel, ausgehend von der obersten Rohform, stückweise eine Rohform eben ausgerichtet auf und transportiert diese zur Einrichtung zur Rundformung 9.
Es ist denkbar, dass eine Viehlzahl von Stapeln, beispielsweise auf Paletten angeordnet, an die Position der Hubvorrichtung verbracht werden kann, wobei diese dann von der Hubvorrichtung automatisch aufgenommen werden und der Stapel wie oben bereits erläutert stückweise abgearbeitet wird, wobei die Vorrichtung zur Erzeugung einer hülsenförmigen Druckform nach Abarbeitung eines Plattenstapels von plattenförmigen Zuschnitten der Rohformen auf dem Anlagetisch bzw. der Hubvorrichtung selbsttätig abschaltbar ist.

Alternativ kann statt des oben beschriebenen Abschaltens der Vorrichtung zur Erzeugung einer hülsenförmigen Druckform über eine Steuerung und/oder Regelungseinrichtung ein nächster auf einer Palette angeordneter Stapel von Zuschnitten an und auf die Hubvorrichtung automatisiert verbracht werden und stückweise abgearbeitet werden. Somit könnte eine Endlos-Produktion von hülsenförmigen Druckformen geschaffen werden.

Die weitere Funktionsweise der erfindungsgemäßen Vorrichtung erfolgt im wesentlichen analog zu den in der DE 197 10 901 C1 bereits erläuterten Arbeitsschritten.

Die Fig. 3 zeigt die erfindungsgemäße Vorrichtung in der Start-Position, der Plattenansaugrahmen 12 parkt im Gehäuse 1, die Einrichtung zur Rundformung 9 befindet sich in der Ausgangslage. Die Stahlleisten 14; 15 liegen auf den Magnetleisten 27; 30. Damit die Rohform 40 dazwischen gebracht werden kann, müssen die Stahlleisten 14; 15 angehoben werden. Dies erfolgt mittels der am Plattensaugrahmen 12 angeordneten Halteelemente 18 bis 21. Die Halteelemente 20; 21 zum Abheben der verfahrbar ausgestalteten Stahlleiste 15 von der beweglichen Magnetleiste sind, wie oben beschrieben, mittels eines von einem Linearantrieb16 angetriebenen Schlitten 17 verfahrbar und an die Stahlleiste 15 positionierbar. Die Halteelemente 20; 21 bewegen sich aus einer minimalen Plattenlängen-Position 34 in Richtung maximaler Plattenlängen-Position 35 bis eine mitgeführte, nicht näher dargestellte, Sensorik den Standort von der Magnetleiste 30 und der auf der Magnetleiste 30 sitzenden Stahlleiste 15 erkennt und die Halteelemente 20; 21 in Position bringt.

Bevor die fertige hülsenförmige Druckform von der Einrichtung zur Rundformung, im spezielleren von den Magnetleisten 27; 30 entnommen werden kann, werden die von den Magnetleisten auf Grund des angelegten Magnetfeldes angezogenen Stahlleisten 14; 15 von im Gehäuse 1 drehbar gelagerten Schwenkarmen 36; 37 mit daran angeordneten Halteelementen 38; 39, welche als elektrische Haftmagnete ausgeführt sind, abgehoben (Fig. 3).

Die Start-Position ist hier derart ausgestaltet, daß sich der Standort der Magnetleiste 30 und der auf der Magnetleiste 30 sitzenden Stahlleiste 15 in der maximalen Plattenlängen-Position 35 befindet. Der Standort der Magnetleiste 30 und der auf der Magnetleiste 30 sitzenden Stahlleiste 15 kann sich alternativ, nicht näher dargestellt, auch in der minimalen Plattenlängen-Position 34 befinden.

Mit Ausnahme der in Fig. 3 beschriebenen Start-Position und der Abnahme der Stahlleisten ist die weitere Funktionsweise der erfindungsgemäßen Vorrichtung analog zu den in der DE 197 10 901 C1 bereits erläuterten Arbeitsschritte. Diese Arbeitsschritte können alle automatisiert ablaufen.

Der Arbeitsschritt der Entnahme der fertigen hülsenförmigen Druckform aus dem Gehäuse 1 bzw. von der Einrichtung zur Rundformung 9, der Abtransport mittels einer Fördereinrichtung und das Überrollen der Schweißnähte in der Fördereinrichtung ist ebenfalls analog zu der in der DE 197 10 901 C1 bereits beschrieben Vorrichtungen und deren Funktionsweise. Auf diese Weise kann eine mehrfache Abfolge der analog in der DE 197 10 901 C1 beschriebenen Arbeitsschritte automatisch durchgeführt werden.

Die im Ausführungsbeispiel beschriebene Vorrichtung ist zur Verarbeitung von plattenförmigen Rohformen, welche sowohl aus nicht magnetischem Material, als auch aus magnetischem Material bestehen können, geeignet.

Eine nicht näher dargestellte Variante der Vorrichtung ist, dass bei einer Verarbeitung von plattenförmigen Rohformen, die aus einem magnetischem Material bestehen, die im Ausführungsbeispiel beschriebenen Saugelemente durch elektrische Haltemagnete zu ersetzen, welche wie die Saugelemente der Größe der Rohform zu- und abschaltbar ausgeführt sind.

### Bezugszeichen:

- 1: Gehäuse
- 2: Seitenwand
- 3: Seitenwand
- 4: Traverse
- 5: Traverse
- 6: Traverse
- 7: Traverse
- 8: Traverse
- 9: Einrichtung zur Rundformung
- 10: Schweißanlage
- 11: Anlagetisch
- 12: Plattenansaugrahmen
- 13: Linearantrieb
- 14: Stahlleiste
- 15: Stahlleiste
- 16: Linearantrieb
- 17: Schlitten
- 18: Halteelement
- 19: Halteelement
- 20: Halteelement
- 21: Halteelement
- 22: Saugelement
- 23: Saugelement
- 24: Platte
- 25: Mindestlänge der Rohform
- 26: Maximale Länge der Rohform
- 27: Magnetleiste
- 28: Achse
- 29: Gleitführung
- 30: Magnetleiste
- 31: Hubvorrichtung
- 32: Rundtisch
- 33: Schlitten
- 34: Minimale Plattenlängen-Position
- 35: Maximale Plattenlängen-Position
- 36: Schwenkarm
- 37: Schwenkarm
- 38: Halteelement
- 39: Halteelement
- 40: Rohform
- 41: Plattenkante
- 42: Plattenkante

## Patentansprüche

1. Vorrichtung zur Erzeugung einer hülsenförmigen Druckform aus einem plattenförmigen Zuschnitt, bestehend aus
einer Einrichtung zur Rundformung der Rohform und
einer Schweißanlage, die in einem Gehäuse angeordnet sind, mittels dieser die den Anfang und Ende der Druckform bildenden Plattenkanten durch einen Laserstrahl maßhaltig zuschneidbar und verschweißbar sind,
außerhalb des Gehäuses einem Anlagetisch für die plattenförmige Rohform, und
einer über den Anlagetisch aus dem Gehäuse heraus fahrbare Einrichtung zur Aufnahme des plattenförmigen Zuschnitts der Rohform und zum Transport der Rohform an die Einrichtung zur Rundformung im Gehäuse umfassend,
**dadurch gekennzeichnet, daß**
der Anlagetisch Mittel zum Vorzentrieren der Rohformen aufweist und die fahrbare Einrichtung aus einem Plattenansaugrahmen (12) besteht,
der Plattenansaugrahmen (12) mit Saugelementen (22; 23) durchsetzt ist, der Plattenansaugrahmen (12) an die auf dem Anlagetisch (11) aufzubringende und vorzentrierte Rohform (40) mit den Saugelementen (22; 23) berührend positionierbar ist, wobei nach Berührung der Rohform (40) diese mittels der ansaugenden Saugelemente (22; 23) am Plattenansaugrahmen (12) eben ausgerichtet fixiert ist und lagestabil zur Einrichtung zur Rundformung (9) transportierbar und an der Einrichtung zur Rundformung (9) eben ausgerichtet und lagestabil ablegbar und registergerecht fixierbar ist.

2. Vorrichtung nach Anspruch 1,
**dadurch gekennzeichnet, daß**
die Rohform (40) eine variable Größe aufweist.

3. Vorrichtung nach Anspruch 1, 2 oder 3,
**dadurch gekennzeichnet, daß**
der Plattenansaugrahmen (12) eine Platte (24) aufweist, wobei diese in Form eines Rasters mit den Saugelementen (22; 23) durchsetzt ist.

4. Vorrichtung nach einem der Ansprüche 1, 2 oder 3,
**dadurch gekennzeichnet, daß**
die Saugelemente (22) in einem Bereich einer Mindestlänge (25) der auf dem Anlagetisch (11) aufzubringenden Rohform (40) angeordnet sind und die Saugelemente (23) in einem Bereich zwischen der Mindestlänge (25) und einer maximalen Länge (26) der auf dem Anlagetisch (11) aufzubringenden Rohform (40) angeordnet sind.

5. Vorrichtung nach einem der Ansprüche 1 bis 4,
**dadurch gekennzeichnet, daß**
die Saugelemente (22; 23) entsprechend einer tatsächlichen Länge und/oder Breite der Rohform (40) in ihrer Saugwirkung zu- und abschaltbar sind.

6. Vorrichtung nach einem der Ansprüche 1 bis 4,
**dadurch gekennzeichnet, daß**
die Rohform (40) der Mindestlänge (25) mit ortsfest angeordneten und gleichzeitig die Rohform (40) ansaugenden Saugelementen (22) fixierbar ist und die über die Mindestlänge (25) hinausragende Rohform (40) mittels entsprechend ihrer tatsächlichen Länge zum ebenen fixieren benötigte an die Rohform (40) positionierbar und zuschaltbar ansaugende Saugelemente (23) fixierbar ist.

7. Vorrichtung nach einem der Ansprüche 1 bis 6,
**dadurch gekennzeichnet, daß**
der Plattenansaugrahmen (12) mittels einer Hubvorrichtung (31) an die auf dem Anlagetisch (11) aufzubringende Rohform (40) positionierbar ist.

8. Vorrichtung nach einem der Ansprüche 1 bis 7,
**dadurch gekennzeichnet, daß**
die Einrichtung zur Rundformung (9) für die zu verbindenden Plattenkanten (41; 42) eine feststehend angeordnete Magnetleiste (27) und eine auf einem drehbar und transversal bewegbar angeordneten Rundtisch (32) sitzende Magnetleiste (30) aufweist, wobei die feststehend angeordnete Magnetleiste (27) die erste Plattenkante (41) aufnimmt und die transversal bewegbare Magnetleiste (30) entsprechend der tatsächlichen Länge der Rohform (40) sich ergebenden Position der zweiten Plattenkante (42) zur Aufnahme dieser positionierbar ist.

9. Vorrichtung nach Anspruch 8,
**dadurch gekennzeichnet, daß**
bei einer vollen Umdrehung und gleichzeitig transversaler Verschiebung des Rundtisches (32) in Richtung der feststehenden Magnetleiste (27) die Magnetleisten (27; 30) unter Ausbildung einer Hülse zum maßhaltigen Ablängen und Verschweißen der Plattenkanten (41 ;42) in Position bringbar sind.

10. Vorrichtung nach einem der Ansprüche 1 bis 9,
**dadurch gekennzeichnet, daß**
die tatsächliche Länge und Breite der Rohform (40) mittels einer optischen oder mechanischen Abtastvorrichtung ermittelbar ist.

11. Vorrichtung nach Anspruch 10,
**dadurch gekennzeichnet, daß**
die Abtastvorrichtung die tatsächliche Länge und Breite der Rohform (40) in einer Maschinensteuerung übermittelbare Daten umwandelt, wobei gemäß der Daten die zum ebenen fixieren benötigten Saugelemente (22; 23) der Rohform (40) in ihrer Saugwirkung zu- und abschaltbar sind.

12. Vorrichtung nach einem der Ansprüche 1 bis 11,
**dadurch gekennzeichnet, daß**
auf den Anlagetisch (11) mehrere Rohformen in Form eines Plattenstapels legbar sind,
vom Plattenstapel die jeweils oben liegende Rohform (40) mittels des Plattenansaugrahmens (12) aufnehmbar ist und nach Abarbeitung des Plattenstapels selbsttätig abschaltbar ist.

13. Vorrichtung nach einem der Ansprüche 1 bis 12,
**dadurch gekennzeichnet, daß**
die Schweißanlage (3) in Form mindestens eines Lasers im Gehäuse (1) über der Einrichtung zur Rundformung (9) positioniert ist, so daß Laserschneiden und Laserschweißen maschinell durchführbar sind.

## Claims

1. Apparatus for producing a sleeve-shaped printing forme from a plate-shaped blank, consisting of
a device for shaping the raw forme into a round shape and a welding installation which are arranged in a housing and by means of which the plate edges forming the beginning and the end of the printing forme can be cut to size and welded by a laser beam,
outside the housing a feed table for the plate-shaped raw forme, and
a device that can be moved out of the housing over the feed table to receive the plate-shaped blank of the raw forme and transport the raw forme to the round-shaping device in the housing,
**characterised in that** the feed table has means for pre-centering the raw formes and the movable device consists of a plate-suction frame (12), the plate-suction frame (12) has suction elements (22; 23) passing through it, the plate-suction frame (12) can be positioned on the pre-centered raw forme (40) that is to be put on the feed table (11) making contact with the suction elements (22; 23), in which case after the raw forme (40) has been contacted the latter is fixed by means of the suction elements (22; 23) on the plate-suction frame (12) that attract by suction so as to be aligned in a level manner and can be transported in a stable position in relation to the round-shaping device (9) and can be deposited on the round-shaping device (9) so as to be aligned in a level manner and in a stable position and can be fixed in register.

2. Apparatus according to claim 1, **characterised in that** the raw forme (40) is of variable size.

3. Apparatus according to claims 1, 2 or 3,
**characterised in that** the plate-suction frame (12) has a plate (24), with the latter having the suction elements (22; 23) passing through it in the form of a grid.

4. Apparatus according to one of claims 1, 2 or 3,
**characterised in that** the suction elements (22) are arranged in a region of a minimum length (25) of the raw forme (40) that is to be put on the feed table (11), and the suction elements (23) are arranged in a region between the minimum length (25) and a maximum length (26) of the raw forme (40) that is to be put on the feed table (11).

5. Apparatus according to one of claims 1 to 4,
**characterised in that** the suction effect of the suction elements (22; 23) can be switched on and off in accordance with an actual length and/or width of the raw forme (40).

6. Apparatus according to one of claims 1 to 4,
**characterised in that** the raw forme (40) of the minimum length (25) can be fixed with suction elements (22) that are arranged in a fixed location and at the same time attract the raw forme (40) by suction, and the raw forme (40) that projects beyond the minimum length (25) can be fixed by means of suction elements (23) that are required in accordance with its actual length for level fixation and, capable of being positioned on the raw forme (40) and switched on, attract the latter by suction.

7. Apparatus according to one of claims 1 to 6,
**characterised in that** the plate-suction frame (12) can be positioned by means of a lifting apparatus (31) on the raw forme (40) that is to be put on the feed table (11).

8. Apparatus according to one of claims 1 to 7,
**characterised in that** the round-shaping device (9) for the plate edges (41; 42) that are to be connected has a fixedly arranged magnetic strip (27) and a magnetic strip (30) that sits on a turntable (32) that is arranged in a rotatably and transversely movable manner, with the fixedly arranged magnetic strip (27) receiving the first plate edge (41) and the transversely movable magnetic strip (30) being capable of being positioned in accordance with the position of the second plate edge (42) that arises from the actual length of the raw forme (40) in order to receive this edge (42).

9. Apparatus according to claim 8, **characterised in that** with a full revolution and at the same time transverse displacement of the turntable (32) in the direction of the fixed magnetic strip (27), the magnetic strips (27; 30) can be brought into position, whilst forming a sleeve, in order for the plate edges (41; 42) to be cut into lengths of the required size and welded.

10. Apparatus according to one of claims 1 to 9,
**characterised in that** the actual length and width of the raw forme (40) can be determined by means of an optical and mechanical scanning apparatus.

11. Apparatus according to claim 10, **characterised in that** the scanning apparatus converts the actual length and width of the raw forme (40) into data that can be transmitted to a machine control, in which case the suction effect of the suction elements (22; 23) required for the level fixation of the raw forme (40) can be switched on and off in accordance with the data.

12. Apparatus according to one of claims 1 to 11,
**characterised in that** a plurality of raw formes in the form of a plate stack can be laid on the feed table (11), the raw forme (40) that lies at the top in each case can be lifted up from the plate stack by means of the plate-suction frame (12), and after the plate stack has been processed automatic switching off is possible.

13. Apparatus according to one of claims 1 to 12,
**characterised in that** the welding installation (3 - *sic*) in the form of at least one laser is positioned in the housing (1) above the round-shaping device (9) so that laser cutting and laser welding can be carried out mechanically.

## Revendications

1. Dispositif pour fabriquer une forme d'impression en forme de douille à partir d'une découpe en plaque, comprenant :
une installation destinée à façonner en rond la forme brute et
une installation de soudure qui sont disposées dans un boîtier et à l'aide desquelles les arêtes de plaque qui forment le début et la fin de la forme d'impression peuvent être coupées aux dimensions exactes par un rayon laser et être soudées,
à l'extérieur du boîtier une table de pose pour la forme brute en plaque et
une installation qui peut être sortie du boîtier au-dessus de la table de pose et qui sert à recevoir la découpe en plaque de la forme brute et à transporter la forme brute vers l'installation destinée au façonnage en rond dans le boîtier,
**caractérisé en ce que**
la table de pose présente des moyens destinés à précentrer les formes brutes et l'installation mobile se compose d'un cadre de d'aspiration en plaque (12), le cadre de succion en plaque (12) est traversé par des éléments de succion (22 ; 23), le cadre de succion en plaque (12) peut, en étant en contact avec les éléments de succion (22 ; 23), être positionné sur la forme brute (40) précentrée à appliquer sur la table de pose (11), après le contact avec la forme brute (10) celle-ci, orientée à plat, est alors fixée au cadre d'aspiration en plaque (12) à l'aide des éléments de succion (22 ; 23) aspirants et peut être transportée en position stable vers l'installation destinée au façonnage en rond (9) et peut, en étant en position stable et orientée à plat, être déposée sur l'installation destinée au façonnage en rond (9) et fixée selon un repérage correct.

2. Dispositif selon la revendication 1,
**caractérisé en ce que**
la forme brute (40) présente une taille variable.

3. Dispositif selon la revendication 1, 2 ou 3,
**caractérisé en ce que**
le cadre d'aspiration en plaque (12) présente une plaque (24), celle-ci étant traversée sous forme de trame par les éléments d'aspiration (22 ; 23).

4. Dispositif selon l'une des revendications 1, 2 ou 3,
**caractérisé en ce que**
les éléments d'aspiration (22) sont disposés dans une zone d'une longueur minimale (25) de la forme brute (40) à appliquer sur la table de pose (11) et les éléments d'aspiration (23) sont placés dans une zone entre la longueur minimale (25) et une longueur maximale (26) de la forme brute (40) à appliquer sur la table de pose (11).

5. Dispositif selon l'une des revendications 1 à 4,
**caractérisé en ce que**
les éléments de succion (22 ; 23) peuvent être activés ou désactivés quant à leur effet de succion en fonction d'une longueur et/ou d'une largeur effective de la forme brute (40).

6. Dispositif selon l'une des revendications 1 à 4,
**caractérisé en ce que**
la forme brute (40) de longueur minimale (25) peut être fixée à l'aide d'éléments de succion (22) disposés à demeure et qui aspirent en même temps la forme brute (40), et la forme brute (40) dépassant vers l'extérieur au-delà de la longueur minimale (25) peut être fixée à l'aide d'éléments d'aspiration (23) nécessaires pour la fixation à plat, en fonction de sa longueur effective, éléments aspiration (23) qui en pouvant être activés et positionnés sur la forme brute (40).

7. Dispositif selon l'une des revendications 1 à 6,
**caractérisé en ce que**
le cadre d'aspiration en plaque (12) peut être positionné sur la forme brute (40) à appliquer sur la table de pose (11) à l'aide d'un dispositif de levage (31).

8. Dispositif selon l'une des revendications 1 à 7,
**caractérisé en ce que**
l'installation destinée au façonnage en rond (9) pour les arêtes de plaque (41 ; 42) à relier présente une bande magnétique (27) disposée à demeure et une bande magnétique (30) posée sur une table circulaire (32) disposée de façon à pouvoir tourner et se déplacer transversalement, la bande magnétique (27) disposée à demeure recevant la première arête de plaque (41) et la bande magnétique (30), mobile transversalement, pouvant en fonction de la position - qui résulte de la longueur effective de la forme brute (40) - de la deuxième arête de plaque (42), être positionnée pour recevoir celle-ci.

9. Dispositif selon la revendication 8,
**caractérisé en ce que**
lorsque la table circulaire (32) effectue une rotation complète et se déplace en même temps transversalement en direction de la bande magnétique (27) à demeure, les bandes magnétiques (27, 30) peuvent en formant une douille être mises en position pour couper les arêtes de plaque (41 ; 42) aux dimensions exactes et pour les souder.

10. Dispositif selon l'une des revendications 1 à 9,
**caractérisé en ce que**
la longueur et la largeur effective de la forme brute (40) peuvent être établies à l'aide d'un dispositif de balayage optique ou mécanique.

11. Dispositif selon la revendication 10,
**caractérisé en ce que**
le dispositif de balayage convertit la longueur et la largeur effective de la forme brute (40) en données qui peuvent être transmises à une commande de machine, les éléments d'aspiration (22 ; 23) nécessaires à la fixation à plat pouvant être activés et désactivés de la forme brute (40) quant à leur effet de succion selon les données.

12. Dispositif selon l'une des revendications 1 à 11,
**caractérisé en ce qu'**
on peut poser sur la table de pose (11) plusieurs formes brutes sous forme d'une pile de plaques, la forme brute (40) qui se trouve à chaque fois au-dessus peut être prélevée de la pile de plaques à l'aide du cadre d'aspiration en plaque (12) et le dispositif peut être automatiquement désactivé après l'usinage de la pile de plaques.

13. Dispositif selon l'une des revendications 1 à 12,
**caractérisé en ce que**
l'installation de soudure (3) sous forme d'au moins un laser est positionnée dans le boîtier (1) au-dessus de l'installation destinée au façonnage en rond (9), de sorte que le découpage au laser et la soudure au laser peuvent être exécutés de façon mécanisée.
